# EUROPÄISCHE PATENTSCHRIFT

(11) **EP 1 614 080 B1**
(45) Veröffentlichungstag und Bekanntmachung des Hinweises auf die Patenterteilung: **23.01.2008**
(21) Anmeldenummer: 04718902.2
(22) Anmeldetag: 10.03.2004
(51) Int. Cl.: G08B 15/00, G08B 13/196, H04N 7/18, H04N 5/262

(54) **ÜBERWACHUNGSVORRICHTUNG**
MONITORING DEVICE
DISPOSITIF DE SURVEILLANCE

(30) Priorität: 10.03.2003 DE 10310636
(43) Veröffentlichungstag der Anmeldung: 11.01.2006
(73) Patentinhaber: Mobotix AG, 67657 Kaiserslautern (DE)
(72) Erfinder: HINKEL, Ralf, 67724 Höringen (DE); BORCHERS, Klaus, 67731 Otterbach (DE)
(74) Vertreter: Pietruk, Claus Peter
(86) Internationale Anmeldenummer: PCT/DE2004/000471
(87) Internationale Veröffentlichungsnummer: WO 2004/081895

(56) Entgegenhaltungen:
- WO-A-02/093916
- US-A- 5 200 818
- US-A- 6 011 901
- US-A- 6 147 709

## Beschreibung

Die vorliegende Erfindung betrifft das oberbegrifflich Beanspruchte und befaßt sich somit mit Überwachungsvorrichtungen, insbesondere Kameras.

Bei der Überwachung von Raumgebieten bzw. -bereichen mit Kameras besteht häufig die Notwendigkeit, bestimmte Objekte oder Bereiche genau zu beobachten, während andere Bereiche weniger interessant sind. Zu diesem Zweck sind Kameras bekannt, die einerseits auf ein bestimmtes Objekt ausgerichtet werden können und deren Brennweite andererseits veränderlich ist, um ein bestimmtes Objekt größer beobachten zu können. Die Ausrichtung erfolgt typisch elektromotorisch, was eine aufwendige Mechanik erfordert, einen entsprechenden Verschleiß mit sich bringen kann und demgemäß eine regelmäßige Wartung erfordert. Zudem ist es bei Schwenken der Kamera mit Einstellung einer langer Brennweite nicht möglich, simultan ein breites Sichtfeld zu beobachten. Dies hat bereits dazu geführt, daß Kameras entwickelt wurden, bei denen mehrere einzelne Kameras vorgesehen sind, um dann mit der zweiten Kamera etwa ein breites Sichtfeld zu beobachten. Auch diese Kameras leiden aber an den Nachteilen der teuren, trägen und aufwendigen Mechanik.

Eine weitere bekannte Ausführung sieht vor, ein Spiegelsystem im optischen Strahlengang anzuordnen, mit dem ein Rundumblick ermöglicht wird und dann das durch den Spiegel verzerrte Bild digital zu entzerren. Einleuchtenderweise ist hierbei die Bildauflösung insbesondere in stark verzerrten Randbereichen trotz Entzerrung schlecht und es ist ein Beobachten mit hoher Auflösung nicht möglich oder sinnvoll.

Bei Multikamerasystemen ist überdies zu beachten, daß die Übertragungsrate nicht zu hoch wird, um nicht allzuviele Bilddaten übertragen zu müssen. Es sind bereits vom Anmelder der vorliegenden Erfindung Möglichkeiten in älteren Schutzrechten offenbart worden, wie eine Übertragungsrate gesenkt werden kann. Die diesbezüglichen Schutzrechtsanmeldungen werden zu Offenbarungszwecken hiermit vollumfänglich eingegliedert.

Aus der WO 02/093916 ist eine Überwachungsvorrichtung bekannt, mit der Simultan Panorama- und Detailvideoströme aufgenommen werden können und ein einziges, nahtloses Bild dargestellt werden kann. Für Detailbeobachtungen wird eine schwenkbare Kamera vorgeschlagen. Die Bildverarbeitung ist kompliziert.

Aus der US. 5 200 818 ist eine Überwachungsvorrichtung bekannt, in der eine ohne beweglichen Teile aufgebaute Muttikamera Anordnung, eine separate, hochaufgelöste Bechachtung definierbarer Bereichen zulässt.

Wünschenswert ist es, eine Überwachungsvorrichtung vorzusehen, die zumindest einen Teil der Probleme wenigstens partiell verringert.

Die Aufgabe der vorliegenden Erfindung besteht darin, Neues für die gewerbliche Anwendung bereitzustellen.

Die Lösung dieser Aufgabe wird in unabhängiger Form beansprucht. Bevorzugte Ausführungsformen finden sich in den Unteransprüchen.

Die vorliegende Erfindung schlägt somit in einem ersten Grundgedanken eine Überwachungsvorrichtung mit einem Multikameramittel und einem Objektverfolgemittel zur hochaufgelösten Beobachtung beweglicher Objekte vor, bei welchem vorgesehen ist, daß das Objektverfolgemittel ein Bildverknüpfungsmittel zur Erzeugung eines Gesamtbildes aus Multikameramitteleinzelbildern und ein Ausschnittsdefinitionsmittel zur einzelbild. grenzenunabhängigen Definition hochaufgelöst zu beobachtender Ausschnitte umfaßt.

Ein erster wesentlicher Aspekt der vorliegenden Erfindung besteht somit darin, daß durch das Vorsehen einer Vielzahl von Einzelkameras, deren Teilbilder zu einem einzigen Gesamtbild verknüpft werden, und dem Vorsehen eines zusätzlichen Mittels, das definiert, welche Bereiche unabhängig von den Grenzen der Einzelbilder hochaufgelöst zu beobachten sind, eine in vollständig elektronischer Form ermöglichte hochaufgelöste Objektverfolgung gewährleistet wird, die überdies sehr viel schneller dem einzelnen Objekt folgen kann als dies mit Schwenk-Neige-Einheiten einer herkömmlichen starren Kamera oder in Domgehäusen untergebrachten schwenkbaren Kameras möglich ist.

Es ist möglich und bevorzugt, nur oder überwiegend innerhalb des Multikameramittels untereinander weitgehend identische Kameras vorzusehen. Dies erleichtert das Ansprechen der Kameras, die Entwicklung des Multikameramittels und die spätere Wartung. Es muß dann nur Sorge dafür getragen werden, daß jede der untereinander identischen Einzelkameras auf einen bestimmten Bildbereich blickt.

Das Multikameramittel wird typische digital arbeitende Einzelkameras umfassen, das heißt z. B. CCD- und/oder CMOS-Felder oder dergleichen. Diese können ihre Bilder in digitaler Form liefern. Bei einer Vielzahl von Sensoren ergeben sich im heutigen Stand der Technik mit beispielsweise 1.280 horizontalen Punkten schon bei geringer Sensorzahl, wie beispielsweise vier Sensoren, bereits Auflösungen, die auf einem einzelnen Monitor nicht mehr sinnvoll darstellbar sind. Aus diesem Grund wird bevorzugt, daß am Multikameramittel die von einem Sensor bzw. Sensorbereich angeforderte Bildinformation für ein Übersichtsbild mit verringerter Auflösung übertragbar ist. Dies senkt die Netzwerklast durch die Bildübertragung, wenn etwa von typischen LAN- und/oder ISDNfähigen Kamerasystemen eine Bildübertragung erfolgt. Es ist dann wünschenswert, z. B. von einem einzelnen Sensorfeld, in dem derzeit kein per se interessierendes Objekt befindlich ist, mit geringer Auflösung zu übertragen. Bevorzugt wird jedoch, wenn zu jedem Sensorfeld angegeben werden kann, welcher Bereich tatsächlich derzeit interessiert. Es sind also Sensorbereichsdifferenzierungsmittel zur differenzierten Auswahl einer Auflösung vorgesehen, die bevorzugt in der Kamera selbst integriert sind.

Die Vorgabe, welche Bereiche mit hoher Auflösung zu übertragen sind, kann entweder in der Kamera selbst geschehen, z. B. durch eine per se bekannte Bewegungsdetektion; verwiesen wird hierzu auf die vorerwähnten früheren Schutzrechte der Anmelderin, insbesondere die DE 102 61 501.2.

Alternativ ist es möglich, die Vorgabe eines hochaufgelöst zu übertragenden Bereiches von außen vorzusehen, etwa von einem Leitstand aus. Gegebenenfalls kann auch an einem solchen eine automatische Auswahl erfolgen. Daß in jedem Fall das Multikameramittel Datenkompressionsmittel für die Reduktion der Datenübertragungsrate aufweisen kann, sei erwähnt.

Bevorzugt werden sich die Bildbereiche der Einzelkameras zumindest am Rand überlappen. Andernfalls könnten Teile des überwachten Raumes, gegebenenfalls allerdings nur als sehr schmale Streifen, unbeobachtet bleiben. Es sei erwähnt, daß eine Überlappung von Multikameramittel zu Multikameramittel verschieden sein kann. So kann die Montage der Einzelkameras etwa durch Kleben der Einzelkameras ohne hohe Präzision erfolgen und es wird dann lediglich sichergestellt, daß eine Gesamtbilderzeugung die Überlappung in korrekter Weise für den jeweiligen Einzelfall berücksichtigt. Eine entsprechende Kalibrierinformation kann beispielsweise im Multikamerasmittel abgelegt werden, um unabhängig vom jeweiligen Leitstand und der dort vorhandenen Information eine präzise und exakte Bildwiedergabe zu ermöglichen. Auch ist eine selbstlernende Software am Multikameramittel oder einem daran angeschlossenen Leitstand verwendbar.

Es kann bevorzugt sein, wenn die Überlappung der Bildbereiche so gewählt ist, daß jeder Raumbereich von wenigstens zwei Kameras überwacht wird, zumindest in kritischen Bereichen wie Türen, Bankschaltern und dergleichen. Auf diese Weise wird eine erhöhte Sicherheit des Gesamtsystems gegen Kameraausfall erzielt.

Die Einzelkameras können untereinander in ihrer Bild-Erzeugung unterschiedlich sein. Insbesondere ist es möglich, zu jedem Sensor eine automatische Belichtung entsprechend der Lichtverhältnisse des von ihm beobachteten Raumbereiches vorzusehen. So kann ein erster Sensor auf einen sehr dunklen, unbeleuchteten Raumbereich gerichtet sein und entsprechend empfindlicher eingestellt werden, während ein anderer Sensor einen hell erleuchteten Bereich desselben Raumes beobachtet. Das Bildverknüpfungsmittel wird bevorzugt dazu ausgebildet, derartige Unterschiede bevorzugt automatisch zu korrigieren, sofern dies nicht im Multikameramittel geschieht. Zur Korrektur kann erforderlichenfalls Statusinformation über aktuelle Belichtungsinformation usw. mit dem Bild mitübertragen werden.

Es sei weiter darauf hingewiesen, daß typisch die Überwachungsvorrichtung mit einer Gesamtbildanzeige gekoppelt sein wird, die eine typisch geringere Auflösung als jene besitzt, die sich aus der maximal möglichen Gesamtauflösung der Einzelbildkameras ergibt. Es sind dann bevorzugt Detailausschnittanzeigemittel vorgesehen, die detailliertere Informationen zu bestimmten, ausgewählten Bereichen darstellen. Diese Detailausschnittanzeige kann als Bildausschnitt auf ein und demselben Monitor vorgesehen werden und/oder es können separate Monitore vorgesehen sein.

Es sei auch darauf gewiesen, daß eine Bewegungserkennung möglich ist, die an den Kameras selbst starke Bildänderungen detektiert, um interessierende Bildausschnitte zu definieren. Weiter ist es möglich, per se interessierende Bereiche durch einen Nutzer vorgeben zu lassen, d. h. Bildauschnitte, die prinzipiell und/oder dauerhaft und/oder eher detaillierter angezeigt werden müssen, etwa die Bereiche dicht neben einem Bankschalter oder dergleichen. Es kann bevorzugt sein, insbesondere dann, wenn die Bilddaten abgespeichert werden, diese interessierenden Bildbereiche zeitvariabel zu gestalten, um etwa zu jenen Zeiten, an denen ein Bankschalter geöffnet ist, andere Bereiche zu überwachen als zu jenen Zeiten, in denen z. B. Putzkolonnen tätig sind oder ein Gebäude per se geschlossen ist. So können etwa außerhalb der Gebäudeöffnungszeiten Fenster und dergleichen detaillierter beobachtet werden. Dass eine Festlegung detailliert zu beobachtender Bildausschnitte auch möglich ist unter aktueller Auswertung von externen Sensorquellen wie Mikrophonen, Glasbruchsensoren, Türöffnungssensoren, Feuersensoren, Rauchsensoren usw. sei erwähnt. Ebenso sei erwähnt, daß eine statistische Analyse über die Häufigkeit von interessierenden Bildänderungen allein und/oder mit anderer Information herangezogen werden kann, um interessierende Bildbereiche für eine detailliertere Beobachtung festzulegen und/oder auszugrenzen. Daß eine Bereichsübergabe oder die Mitteilung über sich bewegende Objekte von einer Kamera zur nächsten übermittelt werden kann, sei gleichfalls erwähnt. So kann etwa dann, wenn in einem Bildsensor eine größere Veränderung aufgetreten ist, und sich das die Bildänderung hervorrufende Objekt weiter zu einem anderen Sensor bewegt, ein entsprechendes Signal von der Kamera, zu der der erste Sensor gehört, an die Kamera, zu welcher der zweite Sensor gehört, übergeben werden, damit eine kontinuierliche Überwachung des interessierenden Objektes mit hoher Auflösung möglich wird und/oder vermieden wird, daß mit hoher Auflösung als bereits uninteressant erkannte Objekte weiterverfolgt werden. Daß bei Auswertung externer Sensoren eine Schallortung erfolgen kann, Richtmikrophone nachgeführt werden und/oder mehrere Mikrophone ausgewertet werden können, sei gleichfalls erwähnt.

Weiter sei erwähnt, daß es möglich ist, bestimmte Bereiche als uninteressant und/oder nicht beobachtbar auszublenden. So kann etwa sichergestellt werden, daß die Intimsphäre von Personen, die sich häufig durch den Bildbereich bewegen müssen, aber per se nicht zu beobachten sind, geschützt wird, ohne daß entsprechende Blenden oder dergleichen angebracht werden müssen. Es kann hier auch eine Vollausblendung bzw. Abschattung geschehen, was etwa dann hilfreich ist, wenn Kameras als Web-Kameras von nicht bekannten Benutzern angesprochen werden sollen. Daß eine zusätzliche Entzerrung unter Verwendung der überlappenden Bereiche möglich ist, sei ebenfalls erwähnt. Weiter sei ausgeführt, daß gegebenenfalls dann, wenn ein sehr hoher Aufwand zulässig ist, eine bewegliche Kamera zusätzlich vorgesehen werden kann, um mit extrem hoher Auflösung einen Bereich zusätzlich zu beobachten. In einem solchen Fall kann mit dem Multikameramittel zunächst ein Bereich festgelegt werden, der besonders interessant ist, und dann unter Nachführung der beweglichen Kamera erreicht werden, daß von diesem als interessant markierten Bereich Bilder mit hoch höherer Auflösung erhalten werden.

Die Erfindung wird im folgenden nur beispielsweise anhand der Zeichnung beschrieben. In dieser zeigt:

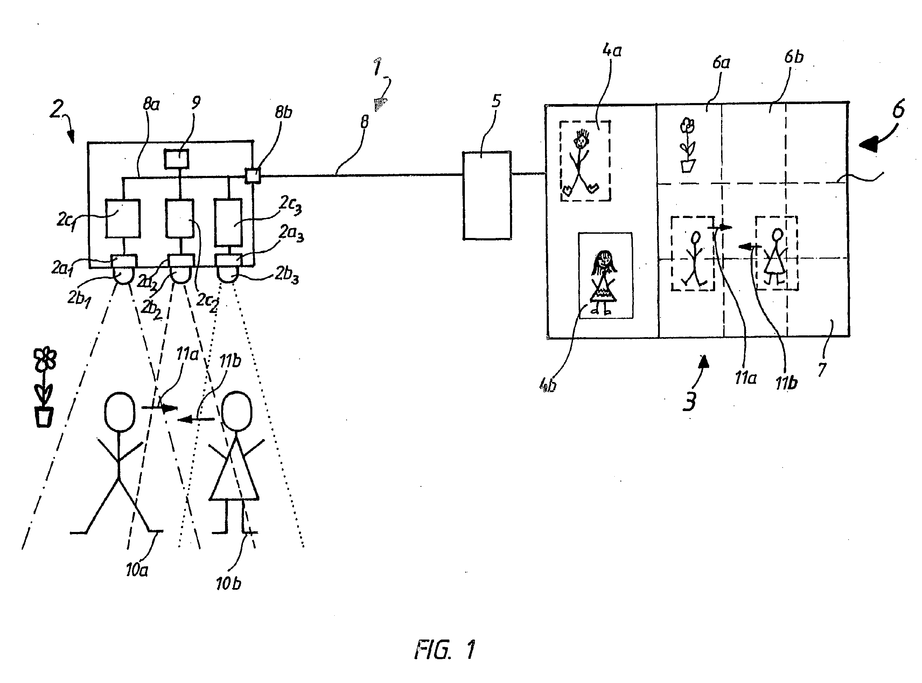

- Fig. 1: eine Darstellung einer erfindungsgemäßen Überwachungsvorrichtung.

Nach Fig. 1 umfaßt eine allgemein mit 1 bezeichnete Überwachungsvorrichtung 1 ein Multikameramittel 2 und ein Objektverfolgemittel 3 zur hochaufgelösten Beobachtung beweglicher Objekte, wobei das Objektverfolgemittel 3 ein Bildverknüpfungsmittel 5 zur Erzeugung eines Gesamtbildes 6 aus Multikameramittelkamera-Einzelbildern 6a, 6b usw. umfaßt und ein Ausschnittsdefinitionsmittel 7 zur einzelbildgrenzenunabhängigen Definition hochaufgelöst zu beobachtender Ausschnitte 4a, 4b.

Die Überwachungsvorrichtung 1 dient im vorliegenden Beispiel dazu, den öffentlichen Bereich einer Schalterhalle zu überwachen und umfaßt zwei durch eine herkömmliche Computernetzwerkleitung (LAN) 8 verbundene Bereiche, nämlich einerseits die Schalterhalle, in welcher das Multikameramittel 2 angeordnet ist, und andererseits einen Leitstandbereich, von dem aus die Beobachtung der Schalterhalle erfolgt und in welchem das Objektverfolgemittel 3 angeordnet ist.

Das Multikameramittel 2 umfaßt im vorliegenden Beispiel ein Feld aus 3 x 3 Einzelkameras, jeweils mit CCD-Feldern 2a und einer zugeordneten Abbildungsoptik 2b sowie einer Auswerteschaltung 2c je Einzelkamera. Die Auswerteeinheiten 2c sind über ein multikameramittelinternes Bussystem 8a miteinander und über entsprechende Buchsen/Steckeranordnungen 8b mit der Leitung 8 zum Leitstand verbunden. Am Bus 8a angeschlossen ist weiter eine Kommunikationssteuereinheit 9 zur Steuerung der Kommunikation der Einzelkameras untereinander und zur Kommunikation mit dem Leitstand über Leitung 8.

Die verschiedenen CCD-Sensoren 2a1, 2a2 usw. sind zueinander identisch und weisen eine Auflösung auf, wie sie preiswert ohne weiteres verfügbar ist. Die Sensoren und Optiken 2a, 2b sind zueinander so ausgerichtet, daß die Raumbereiche, die jeweils von einer Einzelkamera erfaßt werden, überlappen. Dies ist für die dargestellte Ebene anhand der Überlappung der Sichtfelder aus den Optiken 2b1, 2b2, 2b3, wie durch die strichpunktierten, gestrichelten und punktierten Linien jeweils ersichtlich, veranschaulicht. Die Optiken 2b sind feststehend und preiswert. Die Überlappungsbereiche dieser Optiken sind, wie aus der Figur ersichtlich, nicht identisch, d. h. daß Optik 2a1 und 2a2 in einer Breite überlappen, die sich von jener der Breite der Überlappung der Optik 2a2 und 2a3 unterscheidet.

Die Sensoren 2a1, 2a2, 2a3 usw. sind von ihrer Auswerteschaltung 2c1, 2c2, 2c3 usw. mit unterschiedlicher Empfindlichkeit auslesbar, so daß auf Helligkeitsunterschiede von einem zum nächsten Sichtbereich problemfrei reagiert werden kann, indem eine jeweils adäquate Empfindlichkeit gewählt wird.

Die Auswerteschaltung 2c ist dazu ausgelegt, die vom Sensor 2a empfangenen Bilddaten zu konditionieren und wie erforderlich für die Übertragung zu reduzieren. Auf die Datenreduktionsmöglichkeiten gemäß den vorerwähnten Anmeldungen sei zu Offenbarungszwecken hingewiesen. Die Auswerteschaltung 2c ist dabei insbesondere dazu ausgebildet, Bilddaten von ersten Teilbereichen des zugeordneten Sensorfeldes mit hoher Kompression und Daten von anderen Teilbereichen des Sensorfeldes ohne Kompression auf die Leitung 8 über den internen Bus 8a und die Schnittstelle 8b zu senden. Weiter ist jede Einheit 2c dazu ausgebildet, Bewegungen von Objekten 10 innerhalb des ihr zugeordneten Sensorsichtfeldes zu erfassen und Bewegungsausschnitte zu definieren und Bewegungsrichtungen festzustellen. Sie ist weiter dazu ausgebildet, Bewegungen in Richtungen auf Sensorgrenzen hin an die Einheit 9 zu übermitteln und von dort entsprechende Information zu empfangen. Solche Bewegungen von Objekten 10a, 10b sind in der Figur durch Pfeile 11a, 11b dargestellt.

Das Objekverfolgemittel 3 im Überwachungsleitstand umfaßt eine Anzeige, die einerseits ein zusammengesetztes Gesamtbild aus den Einzelbildern 6 der Kameras im Multikameramittel 2 anzeigen kann, wozu die Anzeige zum Empfang des Gesamtbildes mit dem Bildverknüpfungsmittel 5 verbunden ist, und auf der andererseits die gleichfalls vom Bildverknüpfungsmittel 5 empfangen und mit dem Ausschnittsdefinitionsmittel 7 definierten Ausschnitte 4a, 4b hochaufgelöst angezeigt werden können. Bei dem Anzeigemittel kann es sich um einen herkömmlichen, hochauflösenden Computermonitor handeln.

In der Gesamtübersicht mit nur geringen Details sind die Einzelbilder 6a, 6b nicht voneinander unterschieden und/oder getrennt. Die strichpunktierten Linien 12 dienen nur zur Visualisierung bei der Erklärung der Erfindung. Wie ersichtlich, sind die Überlappungsbereiche nur einfach dargestellt, erscheinen also nicht doppelt, obwohl sie von mehreren Kameras erfaßt werden. Das Objektverfolgemittel 3 ist demnach so ausgebildet, daß sich ein kontinuierliches überlappungsfreies Bild ergibt. Dazu kann eine Überlappungsbereichsbeschneidungsstufe vorgesehen sein.

Die Ausschnitte 4a, 4b sind im vorliegenden Beispiel um zwei sich bewegende Personen 10a, 10b gelegt und, wie ersichtlich, werden die Ausschnitte auf einem Teilbereich des Monitors mit höherer Auflösung dargestellt. Alternativ wäre eine Darstellung auf einem separaten Monitor möglich. Bei einem Multimonitorsystem kann dieser an ein und denselben Rechner angeschlossen sein. Alternativ wäre es möglich, durch Vorsehen einer bestimmten lokalen Intelligenz Signale unmittelbar für die Anzeige des hier zu beobachtenden Ausschnittes an einen dedizierten Monitor zu routen.

Das Bildverknüpfungsmittel 5 besteht im vorliegenden Fall aus einem PC, an den die mit geringer Auflösung, also datenreduzierten Einzelkamerabilder über die LAN-Leitung 8 gespeist werden. In diesem Zusammenhang sei darauf hingewiesen, daß als Einzelkamerabild ein Bild bzw. eine Bildsequenz gemeint sein kann, insbesondere bei sequenzieller Übertragung sich nur gering ändernder Bildbereiche von einer einzelnen Kamera, beispielsweise der Einzelkamera des Sensors 2a2, wie in der unter Bezug genommenen Anmeldung des Erfinders/Anmelders. Die Verknüpfung von gegebenenfalls sequenziell mit geringem Zeitversatz übertragenen Bildern aus unterschiedlichen Einzelkameras mit dem Bildverknüpfungsmittel 5 ist dabei vorteilhaft, um eine Datenübertragungsrate auf dem Netzwerk 8 gering zu halten und ermöglicht so insbesondere eine präzise Fernüberwachung über ADSL, ISDN o. ä.

Das Gesamtbild 6 setzt sich, wie vorerwähnt, aus den Einzelbildern 6a, 6b usw. zusammen.

Als Ausschnittsdefinitionsmittel 7 dient zunächst ein berührungsempfindlicher Bildschirmbereich, auf dem das Gesamtbild angezeigt wird und auf welchem ein Benutzer mit dem Finger oder einem geeigneten Gegenstand einen momentan relevanten Bereich markieren kann. Im dargestellten Beispiel sind zwei solche Bereiche 4a und 4b markiert worden. Alternativ kann zur Ausschnittsdefinition auch eine automatische Auswertung im Bildverknüpfungsmittel 5 oder der Kommunikationssteuereinheit 9 erfolgen, etwa unter Berücksichtigung sich aktuell in großem Maß geändert habender Bildbereiche von Einzelkameras, Bereichen des Gesamtbildes etc. und/oder unter Berücksichtigung besonders interessierender oder weniger interessierender Bereiche, wie Bereiche von Dekoration 6a. Bei automatischer Auswahl und/oder Objektverfolgung kann Information über die aktuell besonders hochaufgelösten Bereiche von der Kommunikationssteuereinheit 9 auf Leitung 8 bereitgestellt werden.

Die Übertragungsleitungen 8 sind herkömmliche Übertragungsleitungen, die aber nicht ohne weiteres mit der Datenrate der voll aufgelösten Einzelbilder belastet werden dürfen und/oder sollen.

Über die Leitung 8 kann bidirektional kommuniziert werden, d. h. es können einerseits Bilddaten und/oder andere Daten wie Steuerinformation, Tonsignale usw. vom Multikameramittel 2 zum Bildverknüpfungsmittel 5 übertragen werden und es können andererseits Steuersignale vom Bildverknüpfungsmittel 5 übertragen werden, insbesondere über jene Bereiche, welche ein Benutzer ausweislich der mit dem Ausschnittsdefinitionsmittel 7 vorgegebenen Ausschnittsdefinition hochaufgelöst angezeigt haben möchte.

Die Kommunikationssteuereinheit 9 ist dazu ausgebildet, die von der Auswerteschaltung 2c erhaltenen Einzelbilddaten auszuwerten, insbesondere bezüglich der dort detektierten Bewegung von Objekten, um bei Überschreiten einer Bildgrenze durch ein Objekt, das hochaufgelöst dargestellt werden soll, automatisch eine Mitteilung an die jeweils benachbarten Einzelkameras des Multikameramittels 2 zu übergeben, mit welchen dieses sich bewegende Objekt als nächstes angesichts der beobachteten Bewegung wie durch Pfeile 11a oder 11b dargestellt, erfaßt werden wird.

Mit einer Anordnung gemäß der vorliegenden Erfindung wird eine Beobachtung erfolgen wie folgt:

Es wird zunächst das Multikameramittel 2 mit einer Vielzahl identischer Kameras zusammengesetzt, ohne daß beim Zusammenbau eine hochpräzise Ausrichtung erfolgt. Dann wird das Multikameramittel 2 in einem zu beobachtenden Feld angebracht, und zwar so, daß es mit den Einzelkameras den gesamten interessierenden Raumbereich erfaßt. Nach dieser Anbringung und einmaligen Ausrichtung wird das Multikameramittel 2 fixiert, so daß nachfolgend alle Kameras dauerhaft einen jeweils festen Bereich beobachten werden. Nun wird das Multikameramittel 2 an Leitung 8 angeschlossen und es wird zunächst eine Lernphase begonnen, bei der durch Auswertung der Bildsignale sichergestellt wird, daß in den überlappenden Bildbereichen auftretende Objekte auf dem Gesamtbild nur einmal dargestellt werden. Dies kann in selbstlernender Weise unter Musterauswertung und/oder durch eine Kalibrierphase mit bekannten Mustern erfolgen, gegebenenfalls ist eine Kalibrierung vor Anbringung im Herstellungswerk möglich.

Nun ist die Überwachungsvorrichtung für den Betrieb vorbereitet. Es sei nun zunächst der überwachte Bereich leer; so besteht kein Bedarf, Daten mit hoher Auflösung von einem der Sensoren anzufordern und es liefern alle Sensoren zunächst Bilder mit geringer Auflösung, die vom Bildverknüpfungsmittel 5 zu einem Gesamtbild verknüpft werden.

Treten anschließend Objekte in den Überwachungsbereich, hier dargestellt durch zwei Personen 10a, 10b, so kann ein Beobachter im Leitstand auf dem das Gesamtbild 6 anzeigenden Bereich des berührungsempfindlichen Monitors 7 eine entsprechende Markierung setzen und dadurch hochaufgelöste Bilder der Personen anfordern. Die Bereiche, die hochaufgelöst dargestellt werden sollen, werden unabhängig von den Grenzen der Einzelbilder über Leitung 8 angefordert und werden anhand der Bildbereichsgrenzen der hochaufgelöst zu übertragenden Bereiche durch die Kommunikationssteuereinheit 9 den Einzelkameras zugeordnet. Diesen wird mitgeteilt, daß und welcher Bereich innerhalb des jeweiligen Sensorfeldes hochaufgelöst zu übertragen ist und die Kamera gibt daraufhin auf die interne Leitung 8a in der durch die Kommunikationssteuereinheit 9 geregelten Weise die entsprechenden Daten hochaufgelöst aus, während die Bilddaten der nichtrelevanten Bereiche des jeweiligen Sensors weiterhin mit niedriger Auflösung übertragen werden. Es wird dann möglich, weiter ein Gesamtbild zu erhalten, das den gesamten Raumbereich wiedergibt, wobei die Bildverknüpfungsstufe 5 für die nun hochaufgelöst übertragenen Bereiche einerseits eine Mittelung für die Gesamtbilddarstellung vornimmt und zugleich die hochaufgelöst anzuzeigenden Bereiche auf einem separaten Bildausschnitt mit höherer Detaillierung dargestellt werden.

Da die Anordnung lediglich durch Übertragen elektronischer Steuersignale eine Erhöhung der Bildauflösung für bestimmte Bereiche bewirken kann, ist die Gesamtanordnung sehr schnell. So kann sehr schnell zwischen Objekten gewechselt werden, gegebenenfalls auch automatisch.

Es sei darauf hingewiesen, daß eine automatische Generierung relevanter Bildbereiche, ein automatisches Verfolgen nach Bewegungserkennung usw. gleichfalls möglich ist.

Während vorstehend beschrieben wurde, daß eine Verknüpfung in einer vom Multikameramittel 2 über eine LAN-Leitung getrennten Bildverknüpfungsstufe 5 erfolgt, ist es auch möglich, eine Bildverknüpfung bereits am Multikameramittel 2 vorzusehen. Dies ist vor allem dann sinnvoll, wenn die Kommunikationssteuereinheit 9 als hinreichend leistungsfähiger Digitalschaltkreis gebildet ist und die Aufgabe der Bildverknüpfung mitübernehmen kann. Dies ist dann vorteilhaft, wenn das Multikameramittel in jedem Fall ein standardbrowserfähiges Bild bereitstellen soll. Außerdem ist dann ein Bildabgleich der Einzelkameras zur Kompensation einer eventuellen Bildüberschneidung schon vor LAN-Anbindung des Multikameramittels autark möglich. Falls gewünscht, kann dabei entweder eine Ausschnittswahl vom Benutzer vorgegeben und zum Multikameramittel 2 übertragen werden und/oder es erfolgt eine automatische Auswahl im Multikameramittel 2, insbesondere in einer wie möglich Kommunikationssteuereinheit 9 und Bildverknüpfungsstufe 5 integriert implementierenden Prozessorschaltung.

Es kann eine Bildkomprimierung abhängig von Lage und Bewegung unterschiedlicher Auflösungsstufen erzeugt werden, wobei dann z. B. im Multikameramittel 2 als uninteressant erkannte Bildbereiche bei Gesamtbildvergrößerung und/oder Ausschnittwahl, die insbesondere empfängerseitig erfolgen kann, unscharf, aber interessante Bildbereiche dank der vorhandenen Detaildaten scharf dargestellt werden. Es sei hier insbesondere auf die Möglichkeit hingewiesen, Gesamtbilder etwa aus Kacheln mit unterschiedlicher Auflösung bzw. Detailgenauigkeit zu generieren. Daß eine Einbettung mit höherer Detailgenauigkeit übertragener Bereiche in ein Gesamtbild auch empfängerseitig erfolgen kann, sei erwähnt.

## Patentansprüche

1. Überwachungsvorrichtung mit
einem Multikameramittel aufweisend
eine Vielzahl Digital-Kameras, die fest angeordnet und
so ausgerichtet sind, daß
sich deren Bildbereiche zumindest am Rand überlappen und/oder
allenfalls sehr schmale Streifen eines überwachten Raumes unbeobachtet bleiben,
und mit
einem Objektverfolgemittel zur hochaufgelösten Beobachtung beweglicher Objekte, das
ein Bildverknüpfungsmittel zur Erzeugung eines Gesamtbildes aus Multikameramittel-Einzelbildern und
ein Ausschnittsdefinitionsmittel zur einzelbildgrenzenunabhängigen Definition hochaufgelöst zu beobachtender Ausschnitte umfasst,
**dadurch gekennzeichnet, dass**
die Digital-Kameras gemeinsam eine Gesamt-Auflösung besitzen, die
auf einem einzelnen Monitor,
der über eine herkömmliche Computernetzwerkleitung empfangene Daten vom Multikameramittel anzeigt,
nicht mehr sinnvoll darstellbar ist, und das Muttikameramittel weiter zur Übertragung von Einzelt Bildern mit bereichsweise derart vorgebbar unterschiedlichen Auflösungen über die herkömmliche Computernetzwerkleitung ausgebildet ist, dass
für hochaufgelöst zu beobachtende Ausschnitte Bilddaten hochaufgelöst
und für nichtrelevante Bereiche Bilddaten mit niedriger Auflösung auf die Computerleitung ausgebbar ist, um so
die Netzwerklast durch die Bildübertragung zu verringern.

2. Überwachungsvorrichtung nach einem der vorhergehenden Ansprüche, **dadurch gekennzeichnet, daß** die unterschiedlich aufgelöst zu übertragenden Bereiche und/oder Einzelkameras, von denen mit einer bestimmten Auflösung übertragen werden soll, von außen vorgebbar und/oder mit vorgebbar sind.

3. Überwachungsvorrichtung nach einem der vorhergehenden Ansprüche, **dadurch gekennzeichnet, daß** mindestens in einem Teil-Zentralbereich des Gesamtbildfeldes eine Bildbereichsvollüberlappung der Einzelkamerabildbereiche gegeben ist, so daß jeder Bildbereich innerhalb des Zentralbereiches von wenigstens zwei Einzelkameras beobachtet wird.

4. Überwachungsvorrichtung nach einem der vorhergehenden Ansprüche, **dadurch gekennzeichnet, daß** ein Gesamtbildanzeigemittel vorgesehen ist.

5. Überwachungsvorrichtung nach einem der vorhergehenden Ansprüche, **dadurch gekennzeichnet, daß** eine Detailausschnittanzeige vorgesehen ist.

6. Überwachungsvorrichtung nach einem der vorhergehenden Ansprüche, **dadurch gekennzeichnet, daß** eine Bewegungserkennung vorgesehen ist.

7. Überwachungsvorrichtung nach dem vorhergehenden Anspruch, **dadurch gekennzeichnet, daß** ein Bereichsauswahlmittel zur automatischen Auswahl eines hochaufgelöst anzuzeigenden und/oder zu überwachenden Bereiches vorgesehen ist.

8. Überwachungsvorrichtung nach den beiden vorhergehenden Ansprüchen, **dadurch gekennzeichnet, daß** das Bereichsauswahlmittel zur Auswahl des hochaufgelöst zu überwachenden Bereiches im Ansprechen auf ein Bewegungserkennungssignal aus dem Bewegungserkennungsmittel vorgesehen ist.

## Claims

1. Monitoring device having
multicamera means comprising
numerous digital camera that are
fixedly arranged and
so oriented that
their image regions overlap at least at the periphery
and/or
at worst very narrow strips of a monitored space remain unobserved
and having
object tracking means for high-resolution observation of moving objects comprising
image linkage means for producing a total image from individual images from the multicamera means
and
detail definition means for the definition independent of the boundaries of individual images of details to be observed at high resolution,
**characterised in that**
the digital cameras jointly have a total resolution that
is no longer sensibly presentable
on a single monitor
which displays data from the multicamera means received via a conventional computer network lead and
the multicamera means is further constructed for the transmission over the conventional computer network lead of single images having in parts different resolutions specifiable in such a way that
for details to be observed in high resolution image data is outputable onto the computer lead at high resolution
and for irrelevant areas image data are outputable at low resolution
in order in this way to reduce the network load due to the image transmission.

2. Monitoring device according to one of the preceding claims, **characterised in that** the differently resolved areas to be transmitted and/or single cameras from which transmission is to be at a certain resolution are specifiable from the outside and/or co-specifiable.

3. Monitoring device according to any of the preceding claims, **characterised in that** in a part of the central region of the total image field there is complete overlapping of the image areas of individual cameras so that each image area inside the central area is observed by at least two single cameras.

4. Monitoring device according to any of the preceding claims, **characterised in that** a total image display means is provided.

5. Monitoring device according to any of the preceding claims, **characterised in that** a detail display is provided.

6. Monitoring device according to any of the preceding claims, **characterised in that** movement detection is provided.

7. Monitoring device according to the preceding claim, **characterised in that** an area selection means for the automatic selection of an area to be displayed or monitored in high resolution is provided.

8. Monitoring device according to the two preceding claims, **characterised in that** the area selection means is provided for selecting the area to be monitored in high resolution in response to a movement detection signal from the movement detection means.

## Revendications

1. Dispositif de surveillance comprenant
un moyen à caméras multiples présentant
une pluralité de caméras numériques qui
sont disposées de manière fixe et
orientées de façon que
leurs secteurs d'image se recouvrent au moins au bord et/ou tout au plus de très étroites bandes d'un espace surveillé restent inobservées,
et comprenant
un moyen de suivi d'objets pour l'observation à haute résolution d'objets mobiles,
qui comprend un moyen de combinaison d'images pour générer une image complète à partir des images individuelles du moyen à caméras multiples et
un moyen de définition de sections pour définir des sections à observer à haute résolution indépendamment des frontières des images individuelles,
**caractérisé en ce que**
les caméras numériques possèdent en commun une résolution totale
qui ne peut plus être raisonnablement représentée sur un moniteur individuel qui affiche les données reçues du moyen à caméras multiples via une ligne de réseau informatique classique, et
le moyen à caméras multiples est conçu pour transmettre via la ligne de réseau informatique classique des images individuelles
avec des résolutions différentes prescriptibles par secteurs de façon que
pour des sections à observer à haute résolution, des données d'image puissent être délivrées à haute résolution
et pour des secteurs non intéressants, des données d'images puissent être délivrées à basse résolution sur la ligne informatique
afin de
diminuer ainsi la charge du réseau par la transmission d'images.

2. Dispositif de surveillance selon l'une des revendications précédentes, **caractérisé en ce que** les secteurs à transmettre à des résolutions différentes et/ou les caméras individuelles qui doivent transmettre avec une résolution définie peuvent être prescrits de l'extérieur et/ou participer à la prescription.

3. Dispositif de surveillance selon l'une des revendications précédentes, **caractérisé en ce qu'**il existe au moins dans un sous-secteur central du champ de l'image complète un recouvrement complet de secteurs d'image des secteurs d'image des caméras individuelles, de sorte que chaque secteur d'image au sein du secteur central est observé par au moins deux caméras individuelles.

4. Dispositif de surveillance selon l'une des revendications précédentes, **caractérisé en ce qu'**un moyen d'affichage d'une image complète est prévu.

5. Dispositif de surveillance selon l'une des revendications précédentes, **caractérisé en ce qu'**un moyen d'affichage de sections de détail est prévu.

6. Dispositif de surveillance selon l'une des revendications précédentes, **caractérisé en ce qu'**une détection de mouvement est prévue.

7. Dispositif de surveillance selon la revendication précédente, **caractérisé en ce qu'**un moyen de sélection de secteur pour la sélection automatique d'un secteur à afficher et/ou à surveiller à haute résolution est prévu.

8. Dispositif de surveillance selon les deux revendications précédentes, **caractérisé en ce que** le moyen de sélection de secteur est prévu pour sélectionner le secteur à surveiller à haute résolution en réponse à un signal de détection de mouvement sur le moyen de détection de mouvement.
